# EUROPÄISCHE PATENTSCHRIFT

(11) **EP 2 378 092 B1**
(45) Veröffentlichungstag und Bekanntmachung des Hinweises auf die Patenterteilung: **18.06.2014**
(21) Anmeldenummer: 11159341.4
(22) Anmeldetag: 23.03.2011
(51) Int. Cl.: F01N 3/04, F01N 13/08

(54) **Vorkühler**
Pre-cooler
Prérefroidisseur

(30) Priorität: 13.04.2010 DE 102010014845
(43) Veröffentlichungstag der Anmeldung: 19.10.2011
(73) Patentinhaber: Pierburg GmbH, 41460 Neuss (DE)
(72) Erfinder: Hüsges, Hans-Jürgen, 47877, Willich (DE); Kühnel, Hans-Ulrich, 41239, Mönchengladbach (DE)
(74) Vertreter: Patentanwälte ter Smitten Eberlein Rütten Partnerschaftsgesellschaft

(56) Entgegenhaltungen:
- EP-A1- 1 643 097
- EP-A2- 1 420 158
- WO-A1-03/098026
- US-A1- 2010 146 954

## Beschreibung

Die Erfindung betrifft einen Vorkühler zum Anschluss an einen Abgaskrümmer oder einen Abgasauslass eines Motorblocks einer Verbrennungskraftmaschine mit einem Vorkühlergehäuse, einem Abgaskanal, der im Vorkühlergehäuse ausgebildet ist, sich von einem Abgaseintritt bis zu einem Abgasaustritt erstreckt und dessen Durchströmungsquerschnitt mittels eines im Vorkühlergehäuse angeordneten Ventils regelbar ist, welches über einen Aktuator bewegbar ist und zumindest einem Kühlmittelkanal, der im Vorkühlergehäuse ausgebildet ist und sich von einem Kühlmittelzulauf bis zu einem Kühlmittelablauf erstreckt.

Es sind zu einfacheren Montage und Herstellung in den letzten Jahren vermehrt Abgaskühlmodule entwickelt worden, bei denen vor einem Abgaskühler ein Ventil, wie ein Bypassventil oder ein Abgasrückführventil in einem Ventilgehäuse angeordnet sind. Diese Kühlmodule werden zur Verringerung der vorhandenen Rohrleitungen im Motorraum häufig direkt an dem Auslassbereich des Motorblocks oder am Abgaskrümmer des Verbrennungsmotors befestigt. Da an dieser Position jedoch sehr hohe Temperaturen von etwa 700°C vorliegen, besteht insbesondere bei der Verwendung elektrischer Steller das Problem einer zu hohen thermischen Belastung des Aktuators, was von Ungenauigkeiten in der Positionsregelung bis zum Ausfall des Aktuators und somit des Ventils führen kann.

Aus diesem Grund sind verschiedene Ventilgehäuse bekannt geworden, in weichen ein Kühlmittelkanals ausgebildet ist, über den der Aktuator gegenüber dem Abgaskanal im Gehäuse thermisch getrennt wird. Ein derartiges Ventilgehäuse wird beispielsweise in der DE 603 11 395 T2 offenbart. Eine effektive Kühlung des Abgasstroms selbst erfolgt jedoch aufgrund der geringen gekühlten Flächen und dem Abstand zum Abgaskanal nicht.

Des Weiteren ist aus der EP 1 643 097 A1 ein Abgaskühlmodul bekannt, bei dem ein Wärmetauschergehäuse an einer Flanschplatte befestigt wird, über die Kühlmittelkanäle des Gehäuses mit dem Kühlmittelkreislauf des Verbrennungsmotors verbunden sind. Dieses Gehäuseteil weist eine Öffnung auf, in die ein Ventilgehäuse eingesteckt wird. Dieses Ventilgehäuse wird über einen Flansch am Wärmetauschergehäuse befestigt und ragt in einen Abgaseinlassbereich des Wärmetauschers hinein, der vor der eigentlichen Kühlstrecke angeordnet ist, jedoch in dem bereits Kühlkanäle ausgebildet sind, die das Ventilgehäuse umgeben. Dieser Einlassabschnitt dient entsprechend zur Vorkühlung des Abgases. Nachteilig ist jedoch, dass eine thermische Trennung zum Aktuator nicht gegeben ist sondern dessen Gehäuse weiter einer hohen thermischen Belastung ausgesetzt ist. Entsprechend ist das verwendete Ventil ohne die Flanschplatte, an der der Wärmetauscher befestigt wird, nicht nutzbar. Des Weiteren besteht ein relativ großer Bauraumbedarf, da die Flanschplatte ein Ventilgehäuse und das Gehäuse des Wärmetauschers benötigt werden.

Des Weiteren sind aus der WO 03/098026 A1 und der US 2007/0146954 A1 Wärmetauscher bekannt, bei denen am Einlass ein Ventilgehäuse befestigt ist, weiches einen einzelnen Kühlmittelkanal aufweist, der zwischen dem durchströmten Kanal und dem Steller für die Welle angeordnet ist, so dass der Steller thermisch abgeschirmt ist. Der Kühlmittelkanal wird mit dem Kühlmittelkanal des Wärmetauschers verbunden. Eine Kühlung der Ventilteile wird nicht erreicht. Auch kann ein derartiges Ventil aufgrund der Anordnung des Stellers am Eintritt nicht im Bereich des Abgaskrümmers befestigt werden, da dies zu einer thermischen Überlastung führen würde.

Zusätzlich ist aus der EP 1 420 158 A2 ein Abgasrückführventil bekannt, welches als Klappenventil ausgebildet ist und in dessen Gehäuse, in welchem auch der Antriebsmotor angeordnet ist, Kühlmittelkanäle ausgebildet sind.

Es ist daher Aufgabe der Erfindung, einen Vorkühler bereitzustellen, dessen eines Ende direkt an einen Abgaskrümmer oder einen Abgasauslass eines Motorblocks einer Verbrennungskraftmaschine befestigt werden kann und dessen anderes Ende beispielsweise an einem Abgaswärmetauscher befestigt werden kann, ohne dass daraus eine thermische Überlastung eines Aktuators eines Ventils oder anderer Ventilteile entsteht, welches im Vorkühlergehäuse angeordnet wird. Gleichzeitig soll die Kühlwirkung eines derartigen Gehäuses im Vergleich zu bekannten Ausführungen erhöht werden, um einen nachfolgenden Kühler kleiner bauen zu können. Dieser Vorkühler soll für eine Verwendung in Nutzfahrzeugen geeignet sein und somit große regelbare Durchströmungsquerschnitte aufweisen und dabei selbst einen möglichst geringen Bauraum benötigen.

Diese Aufgabe wird durch einen Vorkühler mit den Merkmalen des Hauptanspruchs gelöst.

Dadurch, dass das Ventil ein Klappenventil ist, dessen Drehwelle in einem ersten Flansch des Vorkühlergehäuses gelagert ist, wobei sich Kühlmittelkanäle zumindest an zwei zur Drehwelle gegenüberliegenden Seiten der Drehwelle erstrecken und wobei der Abgaseintritt im ersten Flansch des Vorkühlergehäuses angeordnet ist und der Kühlmittelzulauf, der Kühlmittelablauf und der Abgasaustritt in einem zweiten Flansch angeordnet sind, der im Wesentlichen senkrecht zum ersten Flansch angeordnet ist, kann ein großer Durchströmungsquerschnitt bei geringem Bauraum geregelt werden. Gleichzeitig besteht eine effektive Kühlleistung im Bereich der Klappe oder der Klappen, wodurch Standardlager, -hebel und -federn verwendet werden können. Trotz der Anbindung direkt am Abgaskrümmer kann durch diese effektive Kühlung direkt am Ausgangspunkt der Hitze die Belastung aller nachfolgenden Bauteile reduziert werden. Die gesamte Kühlmittelversorgung lässt sich direkt an den Kühlmittelkanal eines angebauten Wärmetauschers anschließen, ohne zusätzliche Schlauchleitungen verwenden zu müssen. Der Vorkühler enthält eine 90°-Umlenkung des Abgasstroms, so dass nachfolgende Bauteile, wie der Wärmetauscher, parallel zum Motorblock angeordnet werden können.

In einer besonders bevorzugten Ausführung sind das Klappenventil mit der Drehwelle sowie die beiden Kühlmittelkanäle im ersten Flansch ausgebildet, so dass die Kühlung des Abgasstromes unmittelbar nach Verlassen des Motorblocks beziehungsweise des Abgaskrümmers einsetzt, wodurch eine große thermische Entlastung nachfolgender Bauteile erreicht wird.

Diese Wirkung wird noch verstärkt, wenn der erste Flansch als separates Gehäuseteil des Vorkühlers ausgebildet ist. Durch eine derartige Trennung der Gehäuseteile entsteht eine zusätzliche thermische Entkopplung zum nachfolgenden Gehäuse, an dem der Aktuator befestigt ist.

Vorzugsweise sind im Vorkühlergehäuse zwei Kühlmittelkanäle angeordnet, welche sich parallel zum zweiten Flansch erstrecken und den Abgaskanal an zwei entgegengesetzten Seiten umgeben. So wird auch das entgegengesetzte Ende des Vorkühlers aktiv gekühlt, wodurch der Wirkungsgrad dieses Vorkühlers zusätzlich erhöht wird.

Um einen durchgehenden Kühlkreislauf zu erhalten, sind die beiden Kühlmittelkanäle im ersten Flansch über Rohrleitungen miteinander verbunden. Auf diese Weise wird eine einheitliche Durchströmung sichergestellt.

In einer weiterführenden Ausführung erstrecken sich die zum zweiten Flansch parallelen Kühlmittelkanäle von einem der Kühlmittelkanäle im ersten Flansch aus bis zu den Rohrleitungen. So können alle Umlenkungen über die Rohrleitungen hergestellt werden und die Kanäle im Gehäuse als gerade Bohrungen ausgeführt werden. Trotzdem bleibt die Anzahl anzuschließender Rohrleitungen auf ein Minimum beschränkt.

Um sicherzustellen, dass eine Wärmestrahlung vom Abgaskanal beziehungsweise vom Flansch auf den Aktuator nicht zu hoch wird, ist einer der im ersten Flansch angeordneten Kühlmittelkanäle zwischen dem Abgaskanal und dem Aktuator angeordnet. Hierdurch erfolgt eine thermische Trennung zum Aktuator.

Es wird somit ein Vorkühler geschaffen, der mit seinem ersten Flansch direkt an den Abgaskrümmer oder einen Abgasauslass eines Motorblocks befestigt werden kann, wobei sein entgegengesetzter Flansch direkt an einem Abgaswärmetauscher befestigt werden kann. Eine thermische Überlastung des Aktuators oder anderer folgender Gehäuseteile wird ausgeschlossen. Stattdessen können durch die gute Kühlwirkung kostengünstigere Materialien verwendet werden, da der Kühlerwirkungsgrad eines derartigen Gehäuses im Vergleich zu bekannten Ausführungen deutlich erhöht ist. Daraus folgt auch, dass ein nachfolgender Kühler kleiner gebaut werden kann. Dieser Vorkühler eignet sich besonders für eine Verwendung in Nutzfahrzeugen.

Ein Ausführungsbeispiel eines erfindungsgemäßen Vorkühlers ist in den Figuren dargestellt und wird nachfolgend beschrieben.

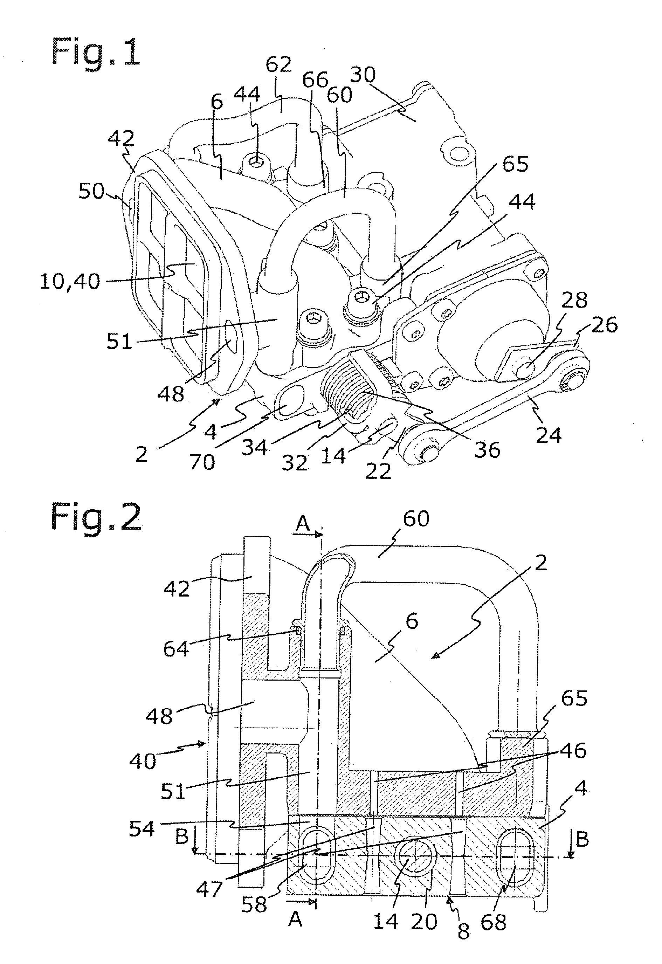

Figur 1 zeigt eine perspektivische Ansicht eines erfindungsgemäßen Vorkühlers.
Figur 2 zeigt eine Seitenansicht des erfindungsgemäßen Vorkühlers der Figur 1 in geschnittener Darstellung.
Figur 3 zeigt eine Schnittansicht des erfindungsgemäßen Vorkühlers der Figuren 1 und 2 entlang der Linie A-A in Figur 2.
Figur 4 zeigt eine Schnittansicht des erfindungsgemäßen Vorkühlers der Figuren 1 bis 3 entlang der Linie B-B in Figur 2.

Der in den Figuren dargestellte Vorkühler weist ein zweiteiliges Vorkühlergehäuse 2 auf, welches aus zwei Gehäuseteilen besteht, wovon ein erstes Gehäuseteil ein erster Flansch 4 ist und ein zweites Gehäuseteil als Strömungsleitgehäuse 6 dient.

Der erste Flansch 4 weist einen Abgaseintritt 8 auf, der an einem Motorblock oder einem Abgaskrümmer befestigt werden kann. Dieser Abgaseintritt 8 ist zweigeteilt und führt in einen ebenfalls zweigeteilten Abgaskanal 10, dessen Durchströmungsquerschnitt mittels eines Ventils 12 regelbar ist.

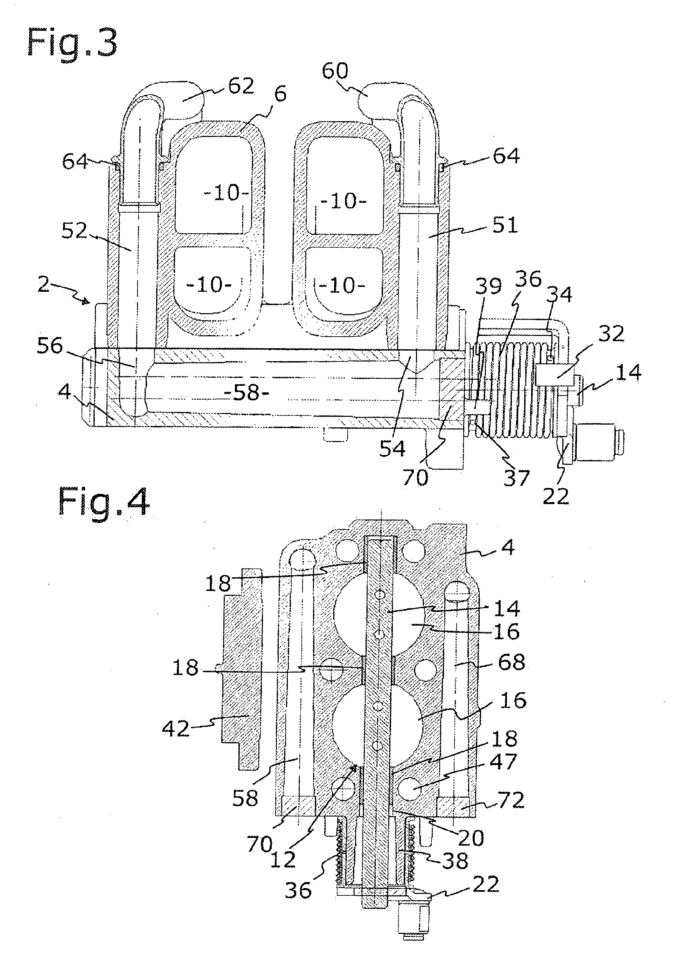

Das Ventil 12 besteht aus einer Drehwelle 14, auf der zwei Klappenkörper 16 drehfest angeordnet sind, wobei jedem Abgaskanal 10 ein Klappenkörper 16 zugeordnet ist. Die Lagerung der Drehwelle 14 erfolgt über insgesamt drei Gleitlager 18, die in einer Lagerbohrung 20 des Flansches 4 ausgebildet ist, wie in Figur 4 zu erkennen ist. Die Drehwelle 14 ragt mit einem Ende aus dem ersten Flansch 4 seitlich heraus. Auf diesem Ende ist ein Exzenter 22 drehfest angeordnet, der über einen Hebel 24 mit einem zweiten Exzenter 26 gekoppelt ist, welcher auf einer Antriebswelle 28 eines elektromotorischen Aktuators 30 drehfest angeordnet ist, so dass eine Drehbewegung des Aktuators 30 auf die Drehwelle 14 des Ventils 12 übertragen wird.

Am Exzenter 22 ist des Weiteren ein Anschlagelement 32 ausgebildet, gegen welches ein erster Endschenkel 34 einer Rückstellfeder 36 anliegt, welche die Drehwelle 14 beziehungsweise einen Fortsatz 38 des ersten Flansches 4 umgibt. Diese Rückstellfeder 36 ist als Schraubenfeder ausgeführt, welche die Drehwelle 14 in Schließstellung der beiden Klappenkörper 16 in bekannter Weise vorspannt. Hierzu liegt ein entgegengesetzter Federschenkel 37 gegen einen Anschlag 39 am Flansch 4 an.

Der Abgaskanal 10 setzt sich im Strömungsleitgehäuse 6 fort und erfährt dort eine Umlenkung um 90°, 50 dass ein Abgasaustritt 40, der in einem zweiten Flansch 42 ausgebildet ist, senkrecht zum Abgaseintritt 8 angeordnet ist. Der zweite Flansch 42 kann mit seinem im vorliegenden Ausführungsbeispiel viergeteilten Abgasaustritt 40 an einen folgenden, nicht dargestellten Abgaswärmetauscher angeschlossen werden.

Der zweite Flansch 42 ist einstückig mit dem Strömungsleitgehäuse 6 ausgeführt, welches über Schrauben 44, die durch Durchgangslöcher 46 des Strömungsleitgehäuses 6 und im ersten Flansch 4 ausgebildete korrespondierende Durchgangslöcher 47 gesteckt werden, mit dem Motorblock oder dem Abgaskrümmer verbindbar ist. Hierdurch wird gleichzeitig der Flansch 4 mit dem Strömungsleitgehäuse 6 unter Zwischenlage einer nicht dargestellten Dichtung verbunden.

Damit das Vorkühlergehäuse 2 seine Kühlfunktion übernehmen kann sind im Vorkühlergehäuse mehrere miteinander verbundene Kühlmittelkanäle ausgebildet.

Im zweiten Flansch 42 ist ein Kühlmittelzulauf 48 sowie ein Kühlmittelablauf 50 ausgebildet, die sich senkrecht zum zweiten Flansch 42 erstrecken und in Kühlmittelkanälen 51, 52 münden, die jeweils senkrecht zum Kühlmittelzulauf 48 beziehungsweise Kühlmittelablauf 50 verlaufen und sich zu den entgegengesetzten Enden des Strömungsleitgehäuses 6 erstrecken, so dass sie den Abgaskanal 10 an zwei entgegengesetzten Seiten umgeben. Die ersten Enden der beiden Kühlmittelkanäle 51, 52 sind fluidisch über Verbindungskanäle 54, 56, die die Kühlmittelkanäle 51, 52 verlängern, mit zwei entgegengesetzten Enden eines im ersten Flansch 4 angeordneten Kühlmittelkanals 58 verbunden, der sich parallel zur Drehwelle 14 im ersten Flansch 4 erstreckt. Die entgegengesetzten Enden der Kühlmittelkanäle 51, 52 sind mit Rohrleitungen 60, 62 verbunden, welche unter Zwischenlage von Dichtringen 64 in die Kühlmittelkanäle 51, 52 ragen. Die Rohrleitungen 60, 62 verlaufen U-förmig zur vom zweiten Flansch 42 entfernten Seite des Strömungsleitgehäuses 6, wo die Rohrleitungen 60, 62 wiederum unter Zwischenlage einer nicht dargestellten Dichtung in Kühlmittelkanäle 65, 66 ragen, welche sich vom Strömungsleitgehäuse 6 in den ersten Flansch 4 erstrecken, wo sie in entgegengesetzte Enden eines Kühlmittelkanals 68 münden, der sich im ersten Flansch 4 parallel zur Drehwelle 14 jedoch an der zum Kühlmittelkanal 58 entgegengesetzten Seite der Drehwelle 14 erstreckt. Wie in der Figur 4 zu erkennen ist, sind die Kühlmittelkanäle 58, 68 als offene Bohrungen im ersten Flansch 4 ausgeführt, welche durch Stopfen 70, 72 verschlossen werden.

Über den Kühlmittelzulauf 48 einströmendes Kühlmittel teilt sich im Kühlmittelkanal 51 auf, wobei ein Teilstrom über den Verbindungskanal 54 zum im ersten Flansch 4 angeordneten Kühlmittelkanal 58 strömt, während der andere Teilstrom über die Rohrleitung 60 und den Kühlmittelkanal 65 in den parallel zum Kühlmittelkanal 58 und zur Drehwelle 14 im ersten Flansch 4 verlaufenden Kühlmittelkanal 68 strömt. Während das Kühlmittel aus dem Kühlmittelkanal 58 an der gegenüberliegenden Seite über den Verbindungskanal 56 und den unteren Teil des Kühlmittelkanals 52 zum Kühlmittelablauf 50 strömt, gelangt das Kühlmittel aus dem Kühlmittelkanal 68 über den Kühlmittelkanal 66 und die Rohrleitung 62 zum Kühlmittelkanal 52, von dem aus es zum Kühlmittelablauf 50 strömt und das Vorkühlergehäuse 2 verlässt.

Somit wird das gesamte Vorkühlergehäuse 2 gleichmäßig durchströmt. Sowohl im Bereich des separat ausgebildeten ersten Flansches, an dem der Wärmeeintrag am höchsten ist, als auch im Strömungsleitgehäuse 6 kann auf diese Weise eine hohe Wärmeabfuhr über das Kühlmittel erzielt werden. Hierdurch wird der Aktuator 30 vor Überhitzung geschützt. Des Weiteren können kostengünstigere Materialeien für die Gehäuse verwendet werden. Durch diese gute Kühlwirkung des Vorkühlers bei gleichzeitiger Unterbringung eines Abgasrückführventils oder auch einer Bypassklappe kann ein nachfolgender Wärmetauscher deutlich kleiner gebaut werden, da die Temperatur direkt am Eintritt in hohem Maße abgeführt wird. Der vorgeschlagene Aufbau eignet sich auch bei großen Strömungsmengen, wie sie insbesondere in Nutzfahrzeugen auftreten.

Es sollte deutlich sein, dass innerhalb des Schutzbereiches des Hauptanspruchs im Vergleich zum beschriebenen Ausführungsbeispiel verschiedene Modifikationen möglich sind. Insbesondere können verschiedene Ventile in den Vorkühler integriert werden. Auch ist die Herstellung und konstruktive Ausgestaltung der Gehäuseteile je nach Anwendung modifizierbar. So kann beispielsweise der erste Flansch einstückig mit dem Strömungsleitgehäuse hergestellt werden oder ein weiteres Gehäuseteil im Bereich des zweiten Flansches verwendet werden.

## Patentansprüche

1. Vorkühler zum Anschluss an einen Abgaskrümmer oder einen Abgasauslass eines Motorblocks einer Verbrennungskraftmaschine mit
einem Vorkühlergehäuse (2),
einem Abgaskanal (10), der im Vorkühlergehäuse (2) ausgebildet ist, sich von einem Abgaseintritt (8) bis zu einem Abgasaustritt (40) erstreckt und dessen Durchströmungsquerschnitt mittels eines im Vorkühlergehäuse (2) angeordneten Ventils (12) regelbar ist, welches über einen Aktuator (30) bewegbar ist und
zumindest einem Kühlmittelkanal (51, 52), der im Vorkühlergehäuse (2) ausgebildet ist und sich von einem Kühlmittelzulauf (48) bis zu einem Kühlmittelablauf (50) erstreckt,
**dadurch gekennzeichnet, dass**
das Ventil (12) ein Klappenventil ist, dessen Drehwelle (14) in einem ersten Flansch (4) des Vorkühlergehäuses (2) gelagert ist, wobei sich Kühlmittelkanäle (58, 68) zumindest an zwei zur Drehwelle (14) gegenüberliegenden Seiten der Drehwelle (14) erstrecken und wobei der Abgaseintritt (8) und die beiden Kühlmittelkanäle (58, 68) im ersten Flansch (4) des Vorkühlergehäuses (2) angeordnet sind und der Kühlmittelzulauf (48), der Kühlmittelablauf (50) und der Abgasaustritt (40) in einem zweiten Flansch (42) angeordnet sind, der im Wesentlichen senkrecht zum ersten Flansch (4) angeordnet ist.

2. Vorkühler nach Anspruch 1,
**dadurch gekennzeichnet, dass**
der erste Flansch (4) als separates Gehäuseteil des Vorkühlers ausgebildet ist.

3. Vorkühler nach einem der vorhergehenden Ansprüche,
**dadurch gekennzeichnet, dass**
im Vorkühlergehäuse (2) zwei Kühlmittelkanäle (51, 52) angeordnet sind, welche sich parallel zum zweiten Flansch (42) erstrecken und den Abgaskanal (10) an zwei entgegengesetzten Seiten umgeben.

4. Vorkühler nach einem der vorhergehenden Ansprüche,
**dadurch gekennzeichnet, dass**
die beiden Kühlmittelkanäle (58, 68) im ersten Flansch (4) über Rohrleitungen (60,62) miteinander verbunden sind.

5. Vorkühler nach Anspruch 4,
**dadurch gekennzeichnet, dass**
sich die zum zweiten Flansch (42) parallelen Kühlmittelkanäle (51, 52) von einem der Kühlmittelkanäle (58) im ersten Flansch (4) aus bis zu den Rohrleitungen (60, 62) erstrecken.

6. Vorkühler nach einem der vorhergehenden Ansprüchen,
**dadurch gekennzeichnet, dass**
einer der Kühlmittelkanäle (58, 68) im ersten Flansch (4) zwischen dem Abgaskanal (10) und dem Aktuator (30) angeordnet ist.

## Claims

1. A pre-cooler for connection to an exhaust manifold or an exhaust outlet of an engine block of an internal combustion engine, comprising
a pre-cooler housing (2),
an exhaust duct (10) which is formed in the pre-cooler housing (2), extends from an exhaust inlet (8) to an exhaust outlet (40) and whose flow cross section is controllable by means of a valve (12) arranged in the pre-cooler housing (2), said valve being movable via an actuator (30), and
at least one coolant duct (51, 52) which is formed in the pre-cooler housing (2) and extends from a coolant inlet (48) to a coolant outlet (60),
**characterized in that**
the valve (12) is a flap valve whose rotary shaft (14) is supported in a first flange (4) of the pre-cooler housing (2), wherein coolant ducts (58, 68) extend at least on two sides of the rotary shaft (14) opposite the rotary shaft (14), and wherein the exhaust inlet (8) and the two coolant ducts (58, 68) are arranged in the first flange (4) of the pre-cooler housing (2) and the coolant inlet (48), the coolant outlet (50) and the exhaust outlet (40) are arranged in a second flange (42) that is arranged substantially vertically with respect to the first flange (4).

2. The pre-cooler of claim 1, **characterized in that** the first flange (4) is formed as a separate housing part of the pre-cooler.

3. The pre-cooler of one of the preceding claims, **characterized in that** two coolant ducts (51, 52) are arranged in the pre-cooler housing (2) which extend parallel to the second flange (42) and enclose the exhaust duct (10) on two opposite sides.

4. The pre-cooler of one of the preceding claims, **characterized in that** the two coolant ducts (58, 68) in the first flange (4) are connected with each other via pipe lines (60, 62).

5. The pre-cooler of claim 4, **characterized in that** the coolant ducts (51, 52) parallel to the second flange (42) extend from one of the coolant ducts (58) in the first flange (4) to the pipe lines (60, 62).

6. The pre-cooler of one of the preceding claims, **characterized in that** one of the coolant ducts (58, 68) in the first flange (4) is arranged between the exhaust duct (10) and the actuator (30).

## Revendications

1. Pré-refroidisseur à raccorder à un collecteur d'échappement ou une sortie de gaz d'échappement d'un bloc moteur d'une machine à combustion interne, comprenant
un boitier de pré-refroidisseur (2),
un conduit de gaz d'échappement (10) qui est formé dans ledit boitier de pré-refroidisseur (2), s'étend à partir d'une entrée de gaz d'échappement (8) jusqu'à une sortie de gaz d'échappement (40) et dont la section transversale de passage peut être réglée par une vanne (12) située dans ledit boitier de pré-refroidisseur (2), ladite vanne étant déplaçable par un actionneur (30), et
au moins un conduit de réfrigérant (51, 52) formé dans ledit boitier de pré-refroidisseur (2) et s'étendant à partir d'une entré de réfrigérant (48) jusqu'à une sortie de réfrigérant (50),
**caractérisé en ce que**
ladite vanne (12) est une vanne à clapet dont l'arbre rotatif (14) est supporté dans une première bride (4) dudit boitier de pré-refroidisseur (2), des conduits de réfrigérant (58, 68) s'étendant sur au moins deux cotés de l'arbre rotatif (14) opposés à l'arbre rotatif (14), et ladite entrée de gaz d'échappement (8) et les deux conduits de réfrigérant (58, 68) étant situés dans la première bride (4) dudit boitier de pré-refroidisseur (2) et ladite entrée de réfrigérant (48), ladite sortie de réfrigérant (50) et ladite sortie de gaz d'échappement (40) étant situées dans une deuxième bride (42) sensiblement parallèle à la première bride (4).

2. Pré-refroidisseur selon la revendication 1, **caractérisé en ce que** ladite première bride (4) est formée comme une partie de boitier séparée dudit pré-refroidisseur.

3. Pré-refroidisseur selon l'une quelconque des revendications précédentes, **caractérisé en ce que** deux conduits de réfrigérant (51, 52) sont prévus dans ledit boitier de pré-refroidisseur (2), les conduits s'étendant parallèle à la deuxième bride (42) et entourent ledit coonduit de gaz d'échappement (10) sur deux cotés opposés.

4. Pré-refroidisseur selon l'une quelconque des revendications précédentes, **caractérisé en ce que** les deux conduits de réfrigérant (51, 52) dans ladite première bride (4) sont raccordés l'un à l'autre par des tuyaux (60, 62).

5. Pré-refroidisseur selon la revendication 4, **caractérisé en ce que** les conduits de réfrigérant (51, 52) parallèles à la deuxième bride (42) s'étendent à partir d'un des conduits de réfrigérant (58) dans ladite première bride jusqu'aux tuyaux (60, 62).

6. Pré-refroidisseur selon l'une quelconque des revendications précédentes, **caractérisé en ce qu'**un des conduits de réfrigérant (58, 68) dans ladite première bride (4) est disposé entre ledit conduit de gaz d'échappement (10) et ledit actionneur (30).
